# EUROPEAN PATENT SPECIFICATION

(11) **EP 4 485 261 B1**
(45) Date of publication and mention of the grant of the patent: **23.09.2026**
(21) Application number: 23306033.4
(22) Date of filing: 27.06.2023
(51) Int. Cl.: G06F 21/64, H04L 9/32, H04L 9/00, H04L 9/40

(54) **METHOD AND SYSTEM FOR AUTHENTICATING PHOTOS AND VIDEOS**
VERFAHREN UND SYSTEM ZUR AUTHENTIFIZIERUNG VON FOTOS UND VIDEOS
PROCÉDÉ ET SYSTÈME D'AUTHENTIFICATION DE PHOTOS ET DE VIDÉOS

(43) Date of publication of application: 01.01.2025
(73) Proprietor: BULL SAS, 78340 Les Clayes-Sous-Bois (FR)
(72) Inventor: Cruz, Vitorino, 81539 Muenchen (DE)
(74) Representative: Cabinet Camus Lebkiri

(56) References cited:
- WO-A1-2022/184587
- WO-A1-2022/256724
- US-A1- 2016 379 330

## Description

### TECHNICAL FIELD

The technical field of the invention is the field of data authentication.

The present document concerns a method and system for authenticating photos and videos from the capture source so that a user can verify if the photo or video has been altered after its capture.

### STATE OF THE ART

With the recent developments in image and video automatic generation, for example using artificial intelligence generative models, there is a growing need for authentication of genuinely captured photos and videos. Various technologies and methodologies have been developed to fulfil this task, but each of these solutions presents its own unique set of limitations.

In the rapidly evolving field of digital media authentication, one of the traditional and widely used techniques is digital watermarking. This method, focusing on the embedding of nearly imperceptible data into digital media files, is often used to assert ownership and authenticity. However, as digital manipulation techniques become increasingly sophisticated, the weaknesses of this method are becoming apparent. Skilled adversaries with the right tools can remove or alter these watermarks, undermining their reliability.

Amid the concerns about the limitations of digital watermarking, centralized certification authorities have emerged as another means to confirm the authenticity of digital media. Several platforms and services use these authorities to verify the authenticity of digital media. These authorities use digital signatures and certificates for validation. However, these systems are intrinsically vulnerable due to their centralized nature. Single points of failure, such as system breaches or mismanagement, are a constant threat. Moreover, the lack of decentralization and transparency associated with this approach can often undermine the trust these systems are supposed to generate.

In parallel, reverse image search, such as the one provided by Google^{®} Image or TinEye^{®} has been used to trace an image back to its origin by searching the internet for visually similar images. While this method can effectively trace back to the origin of a picture, it notably struggles with detecting manipulations and validating the authenticity of videos, thus providing only a partial solution to the challenges of digital media authentication.

Machine learning-based detection is another recent advancement in this domain. Algorithms have been developed that can detect deepfakes and manipulated media by analyzing visual anomalies and inconsistencies. These tools offer an effective way to distinguish between manipulated and authentic content. However, their scope is largely reactive, focusing on identifying manipulations rather than affirming authenticity. They are also not designed to trace content back to its original source, leaving a significant aspect of the problem unaddressed.

Finally, the advent of blockchain technology has offered a new avenue for establishing the provenance and authenticity of digital media. Platforms such as Truepic or Po.et hash the content and register it on the blockchain. Despite the promise of this approach, these solutions often do not specialize in deepfake detection, nor can they identify manipulation of the content that was registered in the blockchain prior to its registration. Documents WO 2022/184587 A1, US 2016/379330 A1 and WO 2022/256724 A1 disclose systems and methods for authenticating image data using blockchain networks.

To address the drawbacks mentioned before, there is a need for a solution which can authenticate a photo or a video and which can guarantee it has not been altered since its capture.

### SUMMARY OF THE INVENTION

The present invention solves the above-mentioned problems by providing a solution to authenticate photos and videos captured at a capture source and to verify if a photo or video has been captured by said capture source.

According to a first aspect of the invention, this is satisfied by providing a Method for authenticating digital images comprising:
- Capturing a first image using an image sensor comprised in a first device
- Generating metadata associated with the first image , the metadata generation being performed by a first processor comprised in the first device, the first processor being directly coupled to the image sensor , the metadata comprising data related to conditions of the capture of the first image ,
- Generating , by the first processor , a first unique image signature derived from the first image and from the generated metadata,
- Embedding , by the first processor , the first unique image signature within the first image , thereby forming an authenticated first image ,
- Storing the authenticated first image in a storage medium accessible via a network,
- Extracting , by a second processor , a second unique image signature from a second image ,
- Requesting access via the network, by the second processor , to the first unique image signature using the second unique image signature,
wherein access is allowed if the first unique image signature corresponds to the second unique image signature,
- Confirming , by the second processor , the authenticity of the second image if the requesting access to the first unique image signature using the second unique image led to accessing the first unique image signature or denying the authenticity of the second image if requesting access to the first unique image signature using the second unique image signature led to a failure to access the first unique image signature.

Thanks to the invention, a digital image is stored with appropriate metadata directly at the output of the image sensor which captured it. A verification method is also provided so as to verify the authenticity of the image if a user has the image on his device and wants to verify if it actually is the real image which was captured using the image sensor. That way, any alteration of the image occurring after the capture by the image sensor leads to an unverified authenticity of the altered image, and the user therefore knows that the image was altered after it was captured. This is made possible thanks to the direct coupling between the image sensor and the first processor. It is understood by "direct coupling" a direct communication link without intermediary device between the first processor and the image sensor.

The method according to the invention may also have one or more of the following characteristics, considered individually or according to any technically possible combinations thereof:
- The method further comprises, after the storing of the authenticated first image :
   - Minting a non-fungible token from the first unique image signature, the minting being governed by a smart contract and comprising storing the non-fungible token in a blockchain .
- requesting access to the first unique image signature using the second unique image signature comprises accessing in the blockchain , using the smart contract, the non-fungible token comprising the second unique image signature and wherein the authenticity of the second image is confirmed , if the non-fungible token comprising the second unique image signature is accessible, and wherein the authenticity of the second image is denied , if the non-fungible token comprising the second unique image signature is inaccessible.
- requesting access to the first unique image signature comprises:
   - Sending a request, by the second processor , via the network, to access the first authenticated image, the request comprising the second unique image signature,
   - Extracting, by the second processor , the first unique image signature from the first authenticated image acquired.
- the authenticity of the second image is confirmed if the authenticated image is accessible at a network address related to the second unique image signature and wherein the authenticity of the second image is denied if the authenticated image is inaccessible at a network address related to the second unique image signature.
- the data related to conditions of the capture of the first image comprise an identifier of the first device , an identifier of the image sensor , geolocation information, and/or a timestamp.
- the first unique image signature is obtained by performing a hash of the first image , of the metadata and of a private key stored in the first device .
- accessing the first unique image signature comprises using asymmetric encryption.
- the second image is an image received via a network by a second device comprising the second processor, and wherein the second image has been selected by a user using a human-machine interface of the second device among a plurality of received images.
- The method further comprises a step of displaying, on the second device , a result of the verification of authenticity of the second image .

Another aspect of the invention relates to a system configured to implement the method according to any one of the preceding claims and comprising:
- The first device comprising:
   - the first processor and
   - the image sensor,
- The second processor.

Another aspect of the invention relates to a computer program product comprising instructions which, when the program is executed by a computer, cause the computer to carry out the method according to the invention.

Another aspect of the invention relates to a computer-readable medium having stored thereon the computer program product of the invention.

The invention finds a particular interest when trying to authenticate photo or videos taken by an image sensor, and not generated by a computer.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a system configured to implement the method according to the invention,
- Figure 2 is a schematic representation of a method according to the invention,
- Figure 3 is a schematic representation of two devices of the system and images to authenticate using the method according to the invention.

### DETAILED DESCRIPTION

For greater clarity, identical or similar elements are marked by identical reference signs in all of the figures.

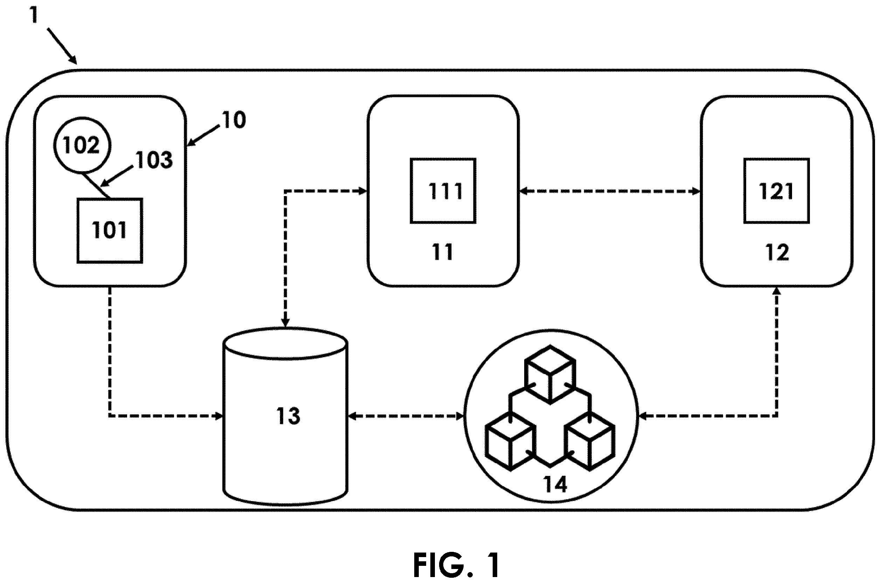

Figure 1 is a schematic representation of an embodiment of a system according to the invention.

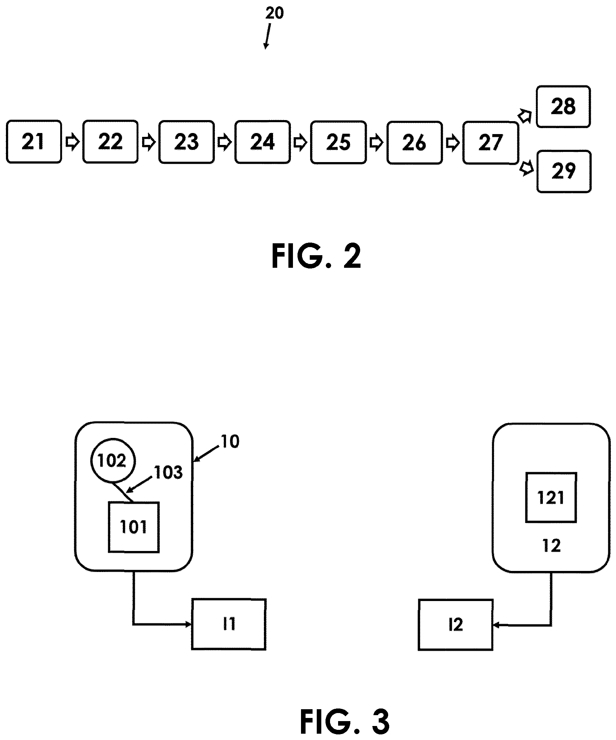

The system 1 represented in Figure 1 permits to implement a method for authenticating digital images according to the invention, said method being represented at Figure 2.

The system 1 comprises a first device 10 comprising at least one processor 101 and at least one image sensor 102. An important part of the invention lies in the direct coupling between the processor 101 and the image sensor 102. Thanks to this direct coupling, meaning that no device is a communication intermediary between the processor 101 and the image sensor 102, an image captured by the image sensor 102 is directly processed by the method according to the invention and therefore directly authenticated.

A user using a device 12 of the system 1 can then authenticate a digital image stored or received by the device 12 as being the authentic digital image captured by the image sensor 102 or as being an altered image or an image not captured by the image sensor 102. The device 12 comprises at least one processor 121.

The devices 10 and 12 can be smartphones, computers, tablets, or any other device comprising the elements described previously and capable of being controlled by a user using a human-machine interface.

When an action is said to be performed by a processor, it is understood that a memory stores instructions which, when executed by the processor, cause the processor to perform said action.

The method 2 according to the invention comprises at least 8 steps. The method is carried out at least by the two processors 101 and 121.

In a step 21, an image I1 is captured by the image sensor 102, as represented at Figure 3, which shows a schematic representation of the two devices of the system, each device comprising a digital image. The image sensor 102 is any device able to convert optical images into electronic signals for display or storage as a file in an electronic device. Image sensors typically consist of an array of light-sensitive pixels that convert incident light into electrical signals. Additional features like color filter arrays, microlenses, and on-chip noise reduction can enhance their performance for capturing high-quality images. The electronic file obtained using an image sensor is called a "digital image". A video captured using the image sensor 102 comprises a plurality of digital images and is therefore comprised under the expression "digital image". The image sensor 102 can be a charge-coupled device (CCD) sensor, a complementary metal-oxide-semiconductor (CMOS) sensor, or any other type of image sensor.

The image, once captured, is directly transmitted to the processor 101. By "directly" is understood a transmission without intermediary device. An intermediary device is understood as a device which could perform an alteration of the captured image I1, such as for example another processor. The processor 101 is the only processor able to perform a processing of the captured image I1 before the generation of metadata at the step 22.

In a step 22, metadata for the captured image I1 is generated by the processor 101. The metadata comprises data related to conditions of the capture of the first image I1. Data related to conditions of the capture of the first image I1 can for example comprise any data, alone or in combination, of the following list : a unique identifier of the device 10, a unique identifier of the image sensor 102, an identifier or the type and/or make and/or model of the image sensor 102, a timestamp, for example a timestamp of capture 21 of the image I1 and/or a timestamp of generation 22 of the metadata for image I1, geolocation information, for example geolocation at the time of capture of the image I1 and/or geolocation at the time of generation 22 of metadata, dimensions of the captured image I1, file format of the captured image I1, exposure, settings of a camera comprising the image sensor 102, orientation of the captured image I1, image resolution of the captured image I1.

In the process according to the invention, once the metadata has been generated at step 22, the method 2 involves a step 23 of generating, by the processor 101, a unique image signature. This signature, derived from the captured image I1 and the metadata generated at step 22, is essentially a digital signature produced by applying a cryptographic hash function such as MD5, SHA-1, SHA-256, or CRC.

The hash function is applied to a combination of entries: the image file of the captured image I1 received by the processor 101, the metadata generated at step 22, and a unique private key held by the first device 10. The private key is used to sign the hash, thus linking the image and the key. These entries are assembled into a structured format, such as a vector, which is then used as an input to the hash function. The hash function processes these inputs to generate a unique image signature. This resulting unique image signature serves as a robust digital fingerprint of the image and associated metadata, allowing for future verification of the image's authenticity and integrity. Because the private key is included in this process, the signature not only attests to the content of the image but also ties it to the specific device that captured it. Therefore, any alteration to the image or its metadata will result in a mismatch when the signature is verified using the corresponding public key, thereby revealing the tampering.

After the signature generation of step 23, the unique image signature is embedded in the captured image I1, by the processor 101, at a step 24. The embedding can for example comprise using a steganographic method, such as one of the following:
- Least Significant Bit (LSB) substitution: This method involves replacing the least significant bits of the pixel values in the image with the bits of the data to be embedded. The changes in the LSBs are usually imperceptible to the human eye.
- Spread Spectrum: This technique distributes the data across multiple pixels in the image by modifying their pixel values within a certain range. The modifications are designed to be visually undetectable or hardly detectable.
- Transform domain methods: These methods involve transforming the image using techniques like discrete cosine transform (DCT) or wavelet transform, and then embedding data in the transformed domain. This allows for a more robust hiding of data.

To use a steganographic method, the signature has to be encoded in an appropriate predetermined format, for example as bits in a vector. The encoded data can then be embedded in the captured image I1 using the steganographic method. This typically involves iterating over the pixels of the image and modifying them according to the chosen steganographic method.

The obtained image embedding the signature is then called the authenticated image.

This authenticated image is stored in a storage medium at step 25, by the processor 101. This means that the processor 101 performs the action to send the authenticated image to the storage medium. The storage medium can be for example the database 13 of Figure 1. The storage medium can alternatively be a memory of the device 10, or any other type of storage. What matters in choosing the storage medium is that the storage medium is accessible via a network, for the device 12 to be able to reach the authenticated image. "Accessible via a network" means that the storage medium comprises means, such as a network card, to send and receive data to and from devices connected to the network or able to reach the network.

To store the image in a storage medium not comprised in the device 10, that is in a storage medium accessible by the device 10 via a network, the storage medium or a device embedding the storage medium and the device 10 can exchange data using an asymmetric cryptography method. In the scenario where the device 10 needs to establish a secure communication with the storage medium 13, an asymmetric cryptographic method can be employed to ensure confidentiality, integrity, and authentication. To do so, the following cryptographic method can be used:
- First, the device 10 holds a public key and the storage medium 13 holds a private key corresponding to the public key.
- The device 10 can then initiate a connection with the storage medium over the network.
- To send the authenticated image, the device 10 encrypts the authenticated image using the public key of the storage medium 13.
- The device 10 transmits the encrypted authenticated image to the storage medium via the network.
- Upon receiving the encrypted authenticated image, the storage medium 13, which holds the private key corresponding to the public key held by the device 10, decrypts the data using its private key. This step ensures that only the storage medium 13 can access the authenticated image.
- For the storage medium 13 to reply to the device 10, the same process is used in reverse. The key generation part of this method is not part of this invention.

Once the authenticated image has been stored and is accessible via a network, a verification of authenticity of another image, referenced I2 at Figure 3, stored or received by the second device 12 used by a user, can be performed. The goal of authenticating image I2 is for the device 12 to be able to tell if the image I2 is indeed the captured image I1 (in that case the authenticity of the image I2 is verified), or if the image I2 is not the captured image I1 or an altered version of the captured image I1, and in that case the authenticity of the image I2 is not verified. The image I2 is preferably stored on the device 12 or received by the user 12. To start the authenticity verification, it is preferred that a user selects the image I2 from a plurality of digital images accessible by the device 12. Alternatively, the authenticity verification can be performed automatically on all the images stored, received or accessible via a network by the device 12.

To verify the authenticity of the image I2, two different embodiments can be used by the device 12. A first embodiment is a decentralized authenticity verification method, and the second embodiment is a centralized authenticity verification method. The device 12 can ask a user which embodiment is to be used, at any time. In this way, both embodiments can coexist in the system 1. Both embodiments comprise a step 26 of extracting, by the processor 121, a second unique image signature from the second image I2. This step of extracting a second unique image signature comprises using the steganographic method in reverse, that is retrieving the signature embedded in the image at step 23.

### Decentralized authenticity verification

In the decentralized authenticity verification method, the authenticated image is stored in the storage medium 13, and a non-fungible token, stored in a blockchain, points to the storage address of the authenticated image in the storage medium 13, the non-fungible token thus representing the authenticity and ownership of the authenticated image I1.

A Non-Fungible Tokens (NFT) is structured as a data unit stored securely on a digital ledger, exemplified by but not limited to, a blockchain. This structure authenticates the digital file's uniqueness, leading to its non-fungible character. An NFT comprises metadata, the metadata typically comprising an address of the digital asset and a current owner of the digital asset. In the present invention, the NFT is "minted" (generated) based on the first image signature and is stored on the blockchain 14 of Figure 1. It comprises metadata which permits to access a storage address in the storage medium 13. Furthermore, the NFT of the invention can comprise an owner, for example a renown entity such as a news agency, a social network, a company or a government.

The blockchain 13 is a classical blockchain, which gives its "non-fungible" character to the NFT. A blockchain is a distributed and decentralized digital ledger that consists of a chain of blocks. Each block contains a set of transactions, and each block is cryptographically linked to the previous one, forming an immutable chain. The blockchain is maintained by a network of computers known as nodes, which validate and store the transactions. Consensus mechanisms, such as Proof of Work (PoW) or Proof of Stake (PoS), are used to ensure agreement on the state of the ledger among the nodes. Transactions within the blockchain are secured through cryptographic algorithms, providing integrity and immutability. In the invention, the choice of consensus mechanism plays a crucial role in determining the sustainability and energy consumption of the system. Proof of Work (PoW) consensus mechanisms used in Bitcoin and early Ethereum have been criticized for their high energy consumption and negative environmental impact. To address these concerns, it is preferred in the invention to use alternative consensus mechanisms, such as:
- Proof of Stake (PoS): PoS is a more energy-efficient consensus mechanism that selects validators based on their stake in the network, reducing the need for resource-intensive mining. Ethereum 2.0, for example, is transitioning from PoW to PoS to improve its energy efficiency and scalability.
- Delegated Proof of Stake (DPoS): DPoS is a variation of PoS that allows token holders to elect a fixed number of delegates responsible for validating transactions and maintaining the blockchain. This approach further reduces energy consumption and enhances scalability.
- Other Consensus Mechanisms: There are various other consensus mechanisms, such as Practical Byzantine Fault Tolerance (PBFT), Proof of Authority (PoA), and Proof of Elapsed Time (PoET), which can be explored for their energy efficiency and sustainability.

The NFT is managed by a smart contract. Smart contracts are self-executing programs deployed on the blockchain. In the case of NFTs, a smart contract is used to define the characteristics and ownership rules of the NFTs. The smart contract specifies the metadata of the NFT, manages ownership records, and enables secure transfers between addresses on the blockchain. It ensures transparency, immutability, and automated execution of actions related to NFT creation, ownership, and transfer. In the invention, the smart contract can permit access, from the NFT, to the authenticated image, for example by transforming the metadata of the NFT into a comprehensive network address to access the authenticated image stored on the storage medium 13.

When trying to verify the authenticity of image I2, that is when trying to know if the image I2 is indeed the image I1 captured at step 21, in the decentralized embodiment, the device 12 uses a software configured to request access, at a step 27, on the blockchain 14, to an NFT corresponding to the second signature extracted at step 26. Accessing the NFT can comprise using the smart contract to access the NFT in the blockchain 14 with the second signature as an entry of the smart contract. An NFT "corresponding to a signature" is an NFT comprising metadata related to the second signature or metadata comprising the second signature.

The authenticity of the image I2 is confirmed at a step 28 if the NFT exists and, optionally, if the NFT verifies a predefined rule based on the ownership of the NFT. For example, the image I2 can be considered authentic, that is the image I2 is the captured image 11, only if the NFT is owned by a predetermined news agency or if it is owned by any entity defined in a predetermined list of entities. The existence of an NFT corresponding to the second unique image signature permits to assert that the second image I2 is an authentic image.

If the NFT does not exist, it means that the second signature, extracted from the image I2, is not a signature of any authenticated image, and therefore is not an authentic image, and not the authentic image I1. In such a context, the authenticity is denied at a step 29.

### Centralized authenticity verification

In the centralized authenticity verification method, the authenticated image is stored in the storage medium 13, and the authenticated image I1 is accessed by a central authority. The central authority is represented as a device 11 in Figure 1. The device 11 comprises a processor 111, configured to perform some of the steps of the verification centralized method.

When the device 12 tries to verify the authenticity of the image I2, it asks the device 11 of the central authority, with a request, to access the first unique image signature at a step 27. To do so, the request sent by the device 12 to the device 11 using communication means such as network cards, comprises the second signature extracted at the step 26. The device 11 and the device 12 preferably use asymmetric encryption to communicate.

The device 11 can comprise a database, linking signatures with images. It can then verify if any image stored in the storage medium 13 has the same signature as the signature of the image I2 received in the request. To do so, the device 11 can either try to access the storage medium 13, looking for the authenticated first image, and/or it can check its own database, looking for the second signature. The device 11 and the storage medium 13 preferably use asymmetric encryption to communicate. If it does not find, in both locations, the received second signature, the image I2 is not authentic and is therefore not the image captured at the step 21. If it finds a correspondence, the image I2 is authentic and is indeed the image I1 captured at the step 21. Either way, the device 11 informs the device 12 using its communication means of the result of the verification and confirms the authenticity at the step 28 if an image I1 exists with the same signature as the extracted second signature or denies the authenticity at the step 29 if no image exists with the same signature as the extracted second signature.

The method 2 can further comprise a preferred but optional step of displaying, on the user device 12, a result of the verification of authenticity of the second image. The displaying can comprise displaying a text confirming or denying the authenticity of the image I2.

## Claims

1. Method (2) for authenticating digital images comprising:
- Capturing (21) a first image (11) using an image sensor (102) comprised in a first device (10),
- Generating (22) metadata associated with the first image (11), the metadata generation (22) being performed by a first processor (101) comprised in the first device, the first processor (101) being directly coupled to the image sensor (102), the metadata comprising data related to conditions of the capture of the first image (11),
- Generating (23), by the first processor (101), a first unique image signature derived from the first image (11) and from the generated metadata,
- Embedding (24), by the first processor (101), the first unique image signature within the first image (11), thereby forming an authenticated first image (11),
- Storing (25) the authenticated first image (11) in a storage medium (13) accessible via a network,
- Extracting (26), by a second processor (121), a second unique image signature from a second image (I2),
- Requesting access (27) via the network, by the second processor (121), to the first unique image signature using the second unique image signature,
wherein access is allowed if the first unique image signature corresponds to the second unique image signature,
- Confirming (28), by the second processor (121), the authenticity of the second image (I2) if the requesting access (27) to the first unique image signature using the second unique image led to accessing the first unique image signature or denying (29) the authenticity of the second image (I2) if requesting access (27) to the first unique image signature using the second unique image signature led to a failure to access the first unique image signature.

2. Method (2) according to claim 1 further comprising, after the storing of the authenticated first image (I1):
- Minting a non-fungible token from the first unique image signature, the minting being governed by a smart contract and comprising storing the non-fungible token in a blockchain (14).

3. Method (2) according to the preceding claim wherein requesting access (27) to the first unique image signature using the second unique image signature comprises accessing in the blockchain (14), using the smart contract, the non-fungible token comprising the second unique image signature and wherein the authenticity of the second image (I2) is confirmed (28), if the non-fungible token comprising the second unique image signature is accessible, and wherein the authenticity of the second image (I2) is denied (29), if the non-fungible token comprising the second unique image signature is inaccessible.

4. Method (2) according to claim 1 wherein requesting access (27) to the first unique image signature comprises:
- Sending a request, by the second processor (121), via the network, to access the first authenticated image, the request comprising the second unique image signature,
- Extracting, by the second processor (121), the first unique image signature from the first authenticated image acquired.

5. Method (2) according to claim 4 wherein the authenticity of the second image (I2) is confirmed if the authenticated image is accessible at a network address related to the second unique image signature and wherein the authenticity of the second image (I2) is denied if the authenticated image is inaccessible at a network address related to the second unique image signature.

6. Method (2) according to any of the preceding claims wherein the data related to conditions of the capture of the first image (11) comprise an identifier of the first device (10), an identifier of the image sensor (102), geolocation information, and/or a timestamp.

7. Method (2) according to any of the preceding claims wherein the first unique image signature is obtained by performing a hash of the first image (11), of the metadata and of a private key stored in the first device (10).

8. Method (2) according to any of the preceding claims wherein accessing the first unique image signature comprises using asymmetric encryption.

9. Method (2) according to any of the preceding claims wherein the second image (I2) is an image received via a network by a second device (12) comprising the second processor (121), and wherein the second image (I2) has been selected by a user using a human-machine interface of the second device (12) among a plurality of received images.

10. Method (2) according to claim 9 further comprising a step of displaying, on the second device (12), a result of the verification of authenticity of the second image (I2).

11. System (1) configured to implement the method according to any one of the preceding claims and comprising:
- The first device (10) comprising:
∘ the first processor (101) and
∘ the image sensor (102),
- The second processor (121).

12. A computer program product comprising instructions which, when the program is executed by a computer, cause the computer to carry out the method (2) according to any of claims 1 to 10.

13. A computer-readable medium having stored thereon the computer program product of claim 12.

## Patentansprüche

1. Verfahren (2) zum Authentifizieren von digitalen Bildern, umfassend:
- Aufnehmen (21) eines ersten Bildes (I1) unter Verwendung eines Bildsensors (102), der in einer ersten Vorrichtung (10) umfasst ist,
- Erzeugen (22) von Metadaten, die dem ersten Bild (I1) zugeordnet sind, wobei die Metadatenerzeugung (22) durch einen ersten Prozessor (101) durchgeführt wird, der in der ersten Vorrichtung umfasst ist, wobei der erste Prozessor (101) direkt an den Bildsensor (102) gekoppelt ist, wobei die Metadaten Daten umfassen, die in Zusammenhang mit Bedingungen der Aufnahme des ersten Bildes (I1) stehen,
- Erzeugen (23), durch den ersten Prozessor (101), einer ersten eindeutigen Bildsignatur, die von dem ersten Bild (I1) und von den erzeugten Metadaten abgeleitet ist,
- Einbetten (24), durch den ersten Prozessor (101), der ersten eindeutigen Bildsignatur innerhalb des ersten Bildes (I1), wodurch ein authentifiziertes erstes Bild (I1) ausgebildet wird,
- Speichern (25) des authentifizierten ersten Bildes (I1) in einem Speichermedium (13), auf das über ein Netzwerk zugegriffen werden kann,
- Extrahieren (26), durch einen zweiten Prozessor (121), einer zweiten eindeutigen Bildsignatur aus einem zweiten Bild (I2),
- Anfordern eines Zugriffs (27) über das Netzwerk, durch den zweiten Prozessor (121), auf die erste eindeutige Bildsignatur unter Verwendung der zweiten eindeutigen Bildsignatur, wobei der Zugriff erlaubt wird, wenn die erste eindeutige Bildsignatur der zweiten eindeutigen Bildsignatur entspricht,
- Bestätigen (28), durch den zweiten Prozessor (121), der Authentizität des zweiten Bildes (I2), wenn das Anfordern eines Zugriffs (27) auf die erste eindeutige Bildsignatur unter Verwendung des zweiten eindeutigen Bildes zum Zugreifen auf die erste eindeutige Bildsignatur führte, oder Verneinen (29) der Authentizität des zweiten Bildes (I2), wenn das Anfordern eines Zugriffs (27) auf die erste eindeutige Bildsignatur unter Verwendung der zweiten eindeutigen Bildsignatur zu einem Fehlschlagen des Zugriffs auf die erste eindeutige Bildsignatur führte.

2. Verfahren (2) nach Anspruch 1, ferner umfassend, nach dem Speichern des authentifizierten ersten Bildes (I1):
- Prägen eines nicht fungiblen Tokens aus der ersten eindeutigen Bildsignatur, wobei das Prägen durch einen Smart Contract geregelt ist und das Speichern des nicht fungiblen Tokens in einer Blockchain (14) umfasst.

3. Verfahren (2) nach dem vorstehenden Anspruch, wobei das Anfordern eines Zugriffs (27) auf die erste eindeutige Bildsignatur unter Verwendung der zweiten eindeutigen Bildsignatur das Zugreifen auf das nicht fungible Token, das die zweite eindeutige Bildsignatur umfasst, in der Blockchain (14) unter Verwendung des Smart Contracts umfasst, und wobei die Authentizität des zweiten Bildes (I2) bestätigt wird (28), wenn auf das nicht fungible Token, das die zweite eindeutige Bildsignatur umfasst, zugegriffen werden kann, und wobei die Authentizität des zweiten Bildes (I2) verneint wird (29), wenn nicht auf das nicht fungible Token, das die zweite eindeutige Bildsignatur umfasst, zugegriffen werden kann.

4. Verfahren (2) nach Anspruch 1, wobei das Anfordern eines Zugriffs (27) auf die erste eindeutige Bildsignatur umfasst:
- Senden einer Anforderung durch den zweiten Prozessor (121) über das Netzwerk, um auf das erste authentifizierte Bild zuzugreifen, wobei die Anforderung die zweite eindeutige Bildsignatur umfasst,
- Extrahieren, durch den zweiten Prozessor (121), der ersten eindeutigen Bildsignatur aus dem ersten erfassten authentifizierten Bild.

5. Verfahren (2) nach Anspruch 4, wobei die Authentizität des zweiten Bildes (I2) bestätigt wird, wenn auf das authentifizierte Bild unter einer Netzwerkadresse zugegriffen werden kann, die in Zusammenhang mit der zweiten eindeutigen Bildsignatur steht, und wobei die Authentizität des zweiten Bildes (I2) verneint wird, wenn unter einer Netzwerkadresse, die in Zusammenhang mit der zweiten eindeutigen Bildsignatur steht, nicht auf das authentifizierte Bild zugegriffen werden kann.

6. Verfahren (2) nach einem der vorstehenden Ansprüche, wobei die Daten, die in Zusammenhang mit den Bedingungen der Aufnahme des ersten Bildes (I1) stehen, eine Kennung der ersten Vorrichtung (10), eine Kennung des Bildsensors (102), Geolokalisierungsinformationen und/oder einen Zeitstempel umfassen.

7. Verfahren (2) nach einem der vorstehenden Ansprüche, wobei die erste eindeutige Bildsignatur durch Durchführen eines Hashs des ersten Bildes (I1), der Metadaten und eines in der ersten Vorrichtung (10) gespeicherten privaten Schlüssels erhalten wird.

8. Verfahren (2) nach einem der vorstehenden Ansprüche, wobei das Zugreifen auf die erste eindeutige Bildsignatur das Verwenden einer asymmetrischen Verschlüsselung umfasst.

9. Verfahren (2) nach einem der vorstehenden Ansprüche, wobei das zweite Bild (l2) ein Bild ist, das über ein Netzwerk durch eine zweite Vorrichtung (12) empfangen wird, die den zweiten Prozessor (121) umfasst, und wobei das zweite Bild (I2) durch einen Benutzer unter Verwendung einer Mensch-Maschine-Schnittstelle der zweiten Vorrichtung (12) aus einer Vielzahl von empfangenen Bildern ausgewählt wurde.

10. Verfahren (2) nach Anspruch 9, ferner umfassend einen Schritt des Anzeigens eines Ergebnisses der Überprüfung der Authentizität des zweiten Bildes (I2) auf der zweiten Vorrichtung (12).

11. System (1), das konfiguriert ist, um das Verfahren nach einem der vorstehenden Ansprüche zu implementieren und umfassend:
- die erste Vorrichtung (10) umfassend:
∘ den ersten Prozessor (101) und
∘ den Bildsensor (102),
- den zweiten Prozessor (121).

12. Computerprogrammprodukt, umfassend Anweisungen, die, wenn das Programm durch einen Computer ausgeführt wird, den Computer veranlassen, das Verfahren (2) nach einem der Ansprüche 1 bis 10 vorzunehmen.

13. Computerlesbares Medium, auf dem das Computerprogrammprodukt nach Anspruch 12 gespeichert ist.

## Revendications

1. Procédé (2) d'authentification d'images numériques comprenant :
- la capture (21) d'une première image (I1) à l'aide d'un capteur d'image (102) compris dans un premier dispositif (10),
- la génération (22) de métadonnées associées à la première image (I1), la génération (22) de métadonnées étant effectuée par un premier processeur (101) compris dans le premier dispositif, le premier processeur (101) étant directement couplé au capteur d'image (102), les métadonnées comprenant des données relatives à des conditions de la capture de la première image (I1),
- la génération (23), par le premier processeur (101), d'une première signature d'image unique dérivée de la première image (I1) et des métadonnées générées,
- l'intégration (24), par le premier processeur (101), de la première signature d'image unique au sein de la première image (I1), formant ainsi une première image authentifiée (I1),
- le stockage (25) de la première image authentifiée (I1) sur un support de stockage (13) accessible par l'intermédiaire d'un réseau,
- l'extraction (26), par un second processeur (121), d'une seconde signature d'image unique à partir d'une seconde image (I2),
- la demande d'accès (27) par l'intermédiaire du réseau, par le second processeur (121), à la première signature d'image unique à l'aide de la seconde signature d'image unique, dans lequel l'accès est autorisé lorsque la première signature d'image unique correspond à la seconde signature d'image unique,
- la confirmation (28), par le second processeur (121), de l'authenticité de la seconde image (I2) lorsque la demande d'accès (27) à la première signature d'image unique à l'aide de la seconde image unique a conduit à l'accès à la première signature d'image unique ou le refus (29) de l'authenticité de la seconde image (I2) lorsque la demande d'accès (27) à la première signature d'image unique à l'aide de la seconde signature d'image unique a conduit à un échec d'accès à la première signature d'image unique.

2. Procédé (2) selon la revendication 1 comprenant en outre, après le stockage de la première image authentifiée (I1) :
- la frappe d'un jeton non fongible à partir de la première signature d'image unique, la frappe étant régie par un contrat intelligent et comprenant le stockage du jeton non fongible dans une chaîne de blocs (14).

3. Procédé (2) selon la revendication précédente, dans lequel la demande d'accès (27) à la première signature d'image unique à l'aide de la seconde signature d'image unique comprend l'accès dans la chaîne de blocs (14), à l'aide du contrat intelligent, au jeton non fongible comprenant la seconde signature d'image unique et dans lequel l'authenticité de la seconde image (I2) est confirmée (28), lorsque le jeton non fongible comprenant la seconde signature d'image unique est accessible, et dans lequel l'authenticité de la seconde image (I2) est refusée (29), lorsque le jeton non fongible comprenant la seconde signature d'image unique est inaccessible.

4. Procédé (2) selon la revendication 1, dans lequel la demande d'accès (27) à la première signature d'image unique comprend :
- l'envoi d'une demande, par le second processeur (121), par l'intermédiaire du réseau, pour accéder à la première image authentifiée, la demande comprenant la seconde signature d'image unique,
- l'extraction, par le second processeur (121), de la première signature d'image unique de la première image authentifiée acquise.

5. Procédé (2) selon la revendication 4, dans lequel l'authenticité de la seconde image (I2) est confirmée lorsque l'image authentifiée est accessible à une adresse réseau apparentée à la seconde signature d'image unique, et dans lequel l'authenticité de la seconde image (I2) est refusée lorsque l'image authentifiée est inaccessible à une adresse réseau apparentée à la seconde signature d'image unique.

6. Procédé (2) selon l'une quelconque des revendications précédentes, dans lequel les données relatives aux conditions de la capture de la première image (I1) comprennent un identifiant du premier dispositif (10), un identifiant du capteur d'image (102), des informations de géolocalisation et/ou une estampille temporelle.

7. Procédé (2) selon l'une quelconque des revendications précédentes, dans lequel la première signature d'image unique est obtenue en effectuant un hachage de la première image (I1), des métadonnées et d'une clé privée stockée dans le premier dispositif (10).

8. Procédé (2) selon l'une quelconque des revendications précédentes, dans lequel l'accès à la première signature d'image unique comprend l'utilisation d'un chiffrement asymétrique.

9. Procédé (2) selon l'une quelconque des revendications précédentes, dans lequel la seconde image (l2) est une image reçue par l'intermédiaire d'un réseau par un second dispositif (12) comprenant le second processeur (121), et dans lequel la seconde image (I2) a été sélectionnée par un utilisateur à l'aide d'une interface humain-machine du second dispositif (12) parmi une pluralité d'images reçues.

10. Procédé (2) selon la revendication 9, comprenant en outre une étape consistant à afficher, sur le second dispositif (12), un résultat de la vérification d'authenticité de la seconde image (I2).

11. Système (1) configuré pour mettre en œuvre le procédé selon l'une quelconque des revendications précédentes et comprenant :
- le premier dispositif (10) comprenant :
∘ le premier processeur (101), et
∘ le capteur d'image (102),
- le second processeur (121).

12. Produit-programme d'ordinateur comprenant des instructions qui, lorsque le programme est exécuté par un ordinateur, amènent l'ordinateur à réaliser le procédé (2) selon l'une quelconque des revendications 1 à 10.

13. Support lisible par ordinateur, sur lequel est stocké le produit-programme d'ordinateur selon la revendication 12.
